# FASCICULE DE BREVET EUROPEEN

(11) **EP 1 219 404 B1**
(45) Date de publication et mention de la délivrance du brevet: **20.10.2004**
(21) Numéro de dépôt: 01403145.4
(22) Date de dépôt: 06.12.2001
(51) Int. Cl.: B29C 47/00, H02G 3/04

(54) **Procédé de fabrication d'un organe tubulaire en materiau synthétique, tube et gaine fabriqués selon ce procédé**
Verfahren zur Herstellung von rohrförmigen Kunststoffelementen, Rohr und Schutzhülse hergestellt nach diesem Verfahren
Manufacturing method for making a tubular plastic profile, tube and cover produced by said method

(30) Priorité: 28.12.2000 FR 0017189
(43) Date de publication de la demande: 03.07.2002
(73) Titulaire: ALCATEL, 75008 Paris (FR)
(72) Inventeur: Bourget, Vincent, 78160 Marly Le Roi (FR); Bonicel, Jean-Pierre, 92500 Rueil Malmaison (FR)
(74) Mandataire: Blokland, Arie

(56) Documents cités:
- EP-A- 0 870 963
- EP-A- 1 001 503
- DATABASE WPI Section Ch, Week 198638 Derwent Publications Ltd., London, GB; Class A17, AN 1986-249106 XP002177799 & JP 61 177234 A (YOSHINO KOGYOSHO CO LTD) , 8 août 1986 (1986-08-08)
- PATENT ABSTRACTS OF JAPAN vol. 2000, no. 06, 22 septembre 2000 (2000-09-22) & JP 2000 074038 A (TOKIWA CHEMICAL KOGYO KK;SYSTEM TECHNICAL:KK), 7 mars 2000 (2000-03-07)

## Description

La présente invention concerne un procédé de fabrication d'un organe tubulaire en matériau synthétique ainsi qu'un tube et une gaine fabriqués selon ce procédé.

Elle s'applique en particulier à la réalisation de réseaux de câbles de fibres optiques.

Habituellement, un câble de fibres optiques comprend plusieurs fibres optiques logées dans une gaine en matériau synthétique, notamment extrudé. Dans un réseau de fibres optiques, les câbles sont, dans la plupart des cas, logés dans des tubes, généralement en matériau synthétique extrudé. Pour enfiler un câble de fibres optiques dans un tube, on utilise différents procédés notamment des procédés de soufflage et de portage. Dans un procédé de portage, le câble de fibres optiques est poussé dans le tube par entraînement dans un flux d'air sous pression injecté dans le tube. L'efficacité de ce procédé de portage est limitée notamment par les frottements de la surface externe de la gaine du câble de fibres optiques avec la surface interne du tube.

De même, l'efficacité d'un procédé de soufflage est limitée notamment par des problèmes de frottements.

Les demandes de brevet EP0870963 A et EP 1001503 A décrivent un procédé de fabrication d'un organe tubulaire en matériau synthétique qui comporte des rainures sur sa surface interne. Ces rainures sont moulées par la tête d'extrudeuse structurée.

L'invention a notamment pour but d'optimiser l'efficacité du montage d'un câble de fibres optiques dans un tube par un procédé de portage ou de soufflage classique.

A cet effet, l'invention a pour objet un procédé de fabrication d'un organe tubulaire en matériau synthétique du type dans lequel l'organe tubulaire est extrudé, caractérisé en ce que, pendant l'extrusion de l'organe tubulaire, on soumet le matériau synthétique extrudé à un flux d'eau sous forme liquide ou vapeur en contact avec la surface interne ou externe de l'organe tubulaire, de façon à former des crevasses sur la surface de l'organe tubulaire en contact avec le flux d'eau, la surface portant les crevasses étant appelée surface à frottement réduit.

Suivant des caractéristiques de différents modes de réalisation du procédé :
- le matériau synthétique extrudé est soumis à un flux d'eau sous forme liquide ;
- le flux d'eau est mis en contact avec la surface interne de l'organe tubulaire ;
- l'organe tubulaire est extrudé dans une tête d'extrudeuse comportant un conduit destiné à injecter le flux d'eau à proximité de la surface interne de l'organe tubulaire ;
- le conduit destiné à injecter le flux d'eau à proximité de la surface de l'organe tubulaire est un conduit destiné à injecter un lubrifiant au contact de la surface interne de l'organe tubulaire, l'eau étant injectée dans le conduit de lubrification en lieu et place du lubrifiant ;
- le flux d'eau est mis en contact avec la surface externe de l'organe tubulaire ;
- le flux d'eau est injecté dans une buse dirigée vers la surface externe de l'organe tubulaire ;
- le matériau synthétique est un matériau thermoplastique ;
- le matériau synthétique est du polyéthylène.

L'invention a également pour objet un tube destiné à former un logement pour un organe allongé tel qu'un câble, notamment un câble de fibres optiques, caractérisé en ce qu'il est fabriqué par un procédé tel que défini ci-dessus, la surface interne du tube étant la surface à frottement réduit.

L'invention a encore pour objet une gaine de câble, notamment de câble de fibres optiques, caractérisé en ce qu'elle est fabriquée par un procédé tel que défini ci-dessus, la surface externe de la gaine étant la surface à frottement réduit.

L'invention sera mieux comprise à la lecture de la description qui va suivre, donnée uniquement à titre d'exemple et faite en se référant aux dessins annexés dans lesquels :
- la figure 1 est une vue schématique d'une tête d'extrudeuse destinée à la mise en oeuvre d'un procédé selon un premier mode de réalisation de l'invention ;
- la figure 2 est une vue schématique d'un tube selon l'invention fabriqué avec la tête d'extrudeuse représentée sur la figure 1 ;
- la figure 3 est une vue similaire à la figure 1 d'une tête d'extrudeuse destinée à la mise en oeuvre d'un procédé selon un second mode de réalisation de l'invention ;
- la figure 4 est vue schématique d'une gaine de câble selon l'invention fabriquée avec la tête d'extrudeuse représentée sur la figure 3.

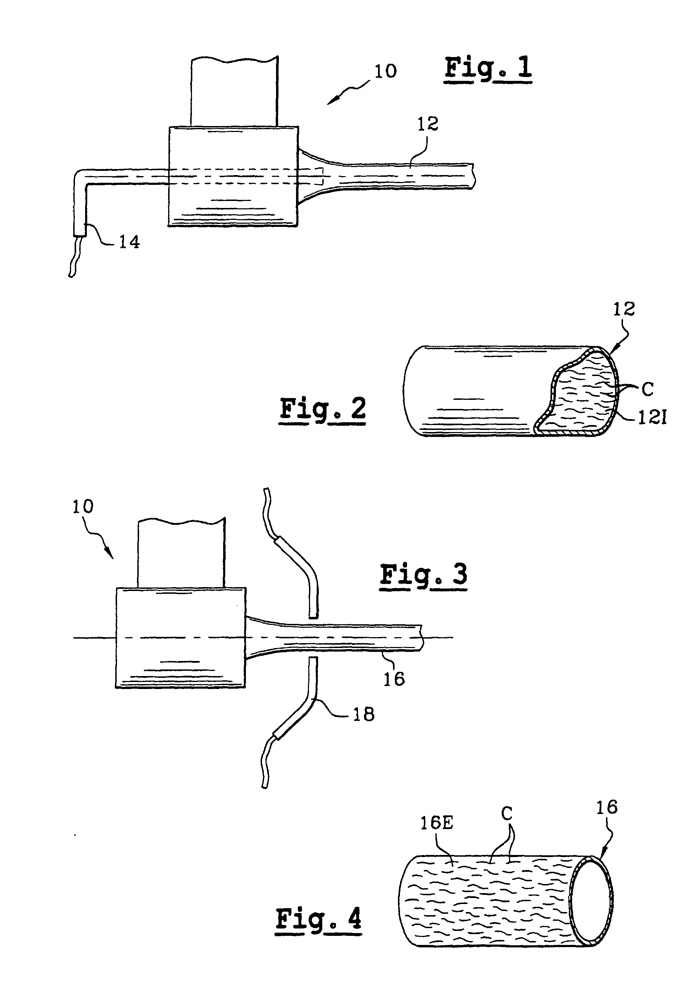

On a représenté schématiquement sur la figure 1 une tête d'extrudeuse classique 10 destinée à fabriquer par extrusion un organe tubulaire 12 en matériau synthétique, plus particulièrement un tube 12 tel que représenté sur la figure 2. Ce tube 12 est destiné à former un logement pour un organe allongé tel qu'un câble, notamment un câble de fibres optiques.

La tête d'extrudeuse 10 comporte un conduit 14 destiné classiquement à injecter un lubrifiant, notamment de la graisse, au contact de la surface interne 121 de l'organe tubulaire 12. Le conduit de lubrification 14 est encore appelé « aiguille ».

Selon un procédé selon un premier mode de réalisation de l'invention mis en oeuvre par la tête d'extrudeuse 10 représentée sur la figure 1, pendant l'extrusion de l'organe tubulaire 12, on soumet le matériau synthétique extrudé à un flux d'eau sous forme liquide ou vapeur en contact avec la surface interne 121 de l'organe tubulaire 12. A cet effet, le flux d'eau sous forme liquide ou vapeur est injecté dans le conduit de lubrification 14 en lieu et place du lubrifiant, de façon à mettre ce flux d'eau en contact avec la surface interne 121 de l'organe tubulaire 12. L'injection du flux d'eau pourra être réalisée le cas échéant par un générateur d'eau sous pression (liquide ou vapeur) relié au conduit de lubrification 14.

En variante, on pourra recourir à un conduit 14 distinct du conduit de lubrification agencé dans la tête d'extrudeuse 10 de façon à pouvoir injecter le flux d'eau à proximité de la surface interne 121 de l'organe tubulaire 12. La distance optimale entre l'extrémité débouchante du conduit 14 et la surface interne 121 de l'organe tubulaire 12 pourra être ajustée par l'homme du métier par essais successifs.

Le matériau synthétique extrudé est un matériau thermoplastique, par exemple du polyéthylène. La température d'extrusion est habituellement comprise entre 200 et 270°C. L'eau sous forme liquide ou vapeur, de température notablement inférieure à la température d'extrusion du matériau synthétique, provoque en venant en contact avec le matériau extrudé, une formation de crevasses C sur la surface de l'organe tubulaire en contact avec le flux d'eau.

De préférence, l'eau mise en contact avec le matériau extrudé est de l'eau froide liquide ayant par exemple une température de 20°C environ.

La surface interne 121 du tube 12 portant les crevasses C constitue une surface à frottement réduit à l'égard notamment d'une gaine de câble destinée à être introduite dans ce tube 12 par un procédé classique de portage ou de soufflage.

On a représenté schématiquement sur la figure 3 une tête d'extrudeuse classique 10 destinée à fabriquer par extrusion un organe tubulaire 16 en matériau synthétique, plus particulièrement un gaine 16 de câble telle que représentée sur la figure 4. Cette gaine 16 est destinée par exemple à envelopper les fibres optiques d'un câble optique.

Selon un procédé selon un second mode de réalisation de l'invention mis en oeuvre par la tête extrudeuse 10 représentée sur la figure 3, pendant l'extrusion de l'organe tubulaire 16, on soumet le matériau synthétique extrudé à un flux d'eau sous forme liquide ou vapeur en contact avec la surface externe 16E de l'organe tubulaire 16. A cet effet, le flux d'eau sous forme liquide ou vapeur est injecté dans au moins une buse 18, de façon à mettre ce flux d'eau en contact avec la surface externe 16E de l'organe tubulaire 16. Eventuellement, l'eau peut être injectée dans deux buses 18 ou plus, comme cela est représenté sur la figure 3. De façon analogue au mode de réalisation précédent, l'injection du flux d'eau pourra être réalisée le cas échéant par un générateur d'eau sous pression (liquide ou vapeur) relié à la buse 18.

La distance optimale entre l'extrémité débouchante de chaque buse 18 et la surface externe 16E de l'organe tubulaire 16 pourra être ajustée par l'homme du métier par essais successifs.

Le contact de l'eau avec la surface externe 16E de l'organe tubulaire 16 provoque la formation de crevasses C sur cette surface externe 16E. De ce fait, la surface externe 16E constitue une surface à frottement réduit à l'égard notamment de la surface interne d'un tube dans lequel le câble muni de la gaine 16 est destiné à être introduit par un procédé classique de portage ou de soufflage.

## Revendications

1. Procédé de fabrication d'un organe tubulaire (12, 16) en matériau synthétique du type dans lequel l'organe tubulaire (12, 16) est extrudé, **caractérisé en ce que**, pendant l'extrusion de l'organe tubulaire (12, 16), on soumet le matériau synthétique extrudé à un flux d'eau sous forme liquide ou vapeur en contact avec la surface interne (121) ou externe (16E) de l'organe tubulaire (12, 16), de façon à former des crevasses (C) sur la surface (12I, 16E) de l'organe tubulaire (12, 16) en contact avec le flux d'eau, la surface (12I, 16E) portant les crevasses (C) étant appelée surface à frottement réduit.

2. Procédé de fabrication d'un organe tubulaire (12, 16) selon la revendication 1, **caractérisé en ce que** le matériau synthétique extrudé est soumis à un flux d'eau sous forme liquide.

3. Procédé de fabrication d'un organe tubulaire (12, 16) selon la revendication 1 ou 2, **caractérisé en ce que** le flux d'eau est mis en contact avec la surface interne (121) de l'organe tubulaire (12).

4. Procédé de fabrication d'un organe tubulaire (12) selon la revendication 3, **caractérisé en ce que** l'organe tubulaire (12) est extrudé dans une tête d'extrudeuse (10) comportant un conduit (14) destiné à injecter le flux d'eau à proximité de la surface interne (12I) de l'organe tubulaire (12).

5. Procédé de fabrication d'un organe tubulaire (16) selon la revendication 4, **caractérisé en ce que** le conduit (14) destiné à injecter le flux d'eau à proximité de la surface interne (121) de l'organe tubulaire (12) est un conduit destiné à injecter un lubrifiant au contact de la surface interne (121) de l'organe tubulaire (12), l'eau étant injectée dans le conduit de lubrification (14) en lieu et place du lubrifiant.

6. Procédé de fabrication d'un organe tubulaire (16) selon la revendication 1 ou 2, **caractérisé en ce que** le flux d'eau est mis en contact avec la surface externe (16E) de l'organe tubulaire (16).

7. Procédé de fabrication d'un organe tubulaire (16) selon la revendication 6, **caractérisé en ce que** le flux d'eau est injecté dans une buse (18) dirigée vers la surface externe (16E) de l'organe tubulaire (16).

8. Procédé de fabrication d'un organe tubulaire (12, 16) selon l'une quelconque des revendications précédentes, **caractérisé en ce que** le matériau synthétique est un matériau thermoplastique.

9. Procédé de fabrication d'un organe tubulaire (12, 16) selon la revendication 8 **caractérisé en ce que** le matériau synthétique est du polyéthylène.

10. Tube (12) destiné à former un logement pour un organe allongé tel qu'un câble, notamment un câble de fibres optiques, **caractérisé en ce qu'**il est fabriqué par un procédé selon l'une quelconque des revendications 1 à 9, la surface interne (12I) du tube (12) étant la surface à frottement réduit.

11. Gaine (16) de câble, notamment de câble de fibres optiques, **caractérisé en ce qu'**elle est fabriquée par un procédé selon l'une quelconque des revendications 1 à 9, la surface externe (16E) de la gaine (16) étant la surface à frottement réduit.

## Patentansprüche

1. Verfahren zur Herstellung eines rohrförmigen Elementes (12, 16) aus Kunststoffmaterial von dem Typ, bei dem das rohrförmige Element (12, 16) extrudiert wird, **dadurch gekennzeichnet, dass** während des Extrudierens des rohrförmigen Elementes (12, 16) das extrudierte Kunststoffmaterial einen Wasserstrom in flüssiger Form oder Dampfform in Kontakt mit der inneren Oberfläche (12I) oder der äußeren Oberfläche (16E) des rohrförmigen Elementes (12, 16) ausgesetzt wird, um Klüfte (C) an der Oberfläche (12I, 16E) des rohrförmigen Elementes (12, 16) in Kontakt mit dem Wasserstrom zu bilden, wobei die die Klüfte (C) tragende Oberfläche (12I, 16E) als Oberfläche mit verringerter Reibung bezeichnet wird.

2. Verfahren zur Herstellung eines rohrförmigen Elementes (12, 16) nach Anspruch 1, **dadurch gekennzeichnet, dass** das extrudierte Kunststoffmaterial einem Wasserstrom in flüssiger Form ausgesetzt wird.

3. Verfahren zur Herstellung eines rohrförmigen Elementes (12, 16) nach Anspruch 1 oder 2, dadurch gekenzeichnet, dass der Wasserstrom in Kontakt mit der inneren Oberfläche (12I) des rohrförmigen Elementes (12) gebracht wird.

4. Verfahren zur Herstellung eines rohrförmigen Elementes (12) nach Anspruch 3, **dadurch gekennzeichnet, dass** das rohrförmige Element (12) in einem Extruderkopf (10) extrudiert wird, der eine Leitung (14) aufweist, die vorgesehen ist, um den Wasserstrom in der Nähe der inneren Oberfläche (12I) des rohrfömigen Elementes (12) einzuspeisen.

5. Verfahren zur Herstellung eines rohrförmigen Elementes (16) nach Anspruch 4, **dadurch gekennzeichnet, dass** die Leitung (14), die vorgesehen ist, den Wasserstrom in der Nähe der inneren Oberfläche (12I) des rohrförmigen Elementes (12) einzuspeisen, eine Leitung ist, die vorgesehen ist, um ein Schmiermittel in Kontakt mit der inneren Oberfläche (12I) des rohrförmigen Elementes (12) einzuspeisen, wobei das Wasser in die Schmiermittelleitung (14) anstelle und anstatt des Schmiermittels eingespeist wird.

6. Verfahren zur Herstellung eines rohrförmigen Elementes (16) nach Anspruch 1 oder 2, **dadurch gekennzeichnet, dass** der Wasserstrom in Kontakt mit der äußeren Oberfläche (16E) des rohrförmigen Elementes (16) gebracht wird.

7. Verfahren zur Hersiellung eines rohrförmigen Elementes (16) nach Anspruch 6, **dadurch gekennzeichnet, dass** der Wasserstrom in eine Düse (18) eingespeist wird, die auf die äußere Oberfläche (16E) des rohrförmigen Elementes (16) ausgerichtet ist.

8. Verfahren zur Herstellung eines rohrförmigen Elementes (12, 16) nach einem beliebigen der vorhergehenden Ansprüche, **dadurch gekennzeichnet, dass** das Kunststoffmaterial ein thermoplastisches Material ist.

9. Verfahren zur Herstellung eines rohrförmigen Elementes (12, 16) nach Anspruch 8, **dadurch gekennzeichnet, dass** das Kunststoffmaterial Polyethylen ist.

10. Rohr (12) zum Bilden einer Aussparung für ein langgestrecktes Element wir etwa ein Kabel, insbesondere ein optisches Faserkabel, **dadurch gekennzeichnet, dass** es durch ein Verfahren nach einem beliebigen der Ansprüche 1 bis 9 hergestellt ist, wobei die innere Oberfläche (12I) des Rohres (12) die Oberfläche mit verringerter Reibung ist.

11. Kabelhülle (16) insbesondere für ein optisches Faserkabel, **dadurch gekennzeichnet, dass** sie mit einem Verfahren nach einem beliebigen der Ansprüche 1 bis 9 hergestellt ist, wobei die äußere Oberfläche (16E) der Hülle (16) die Oberfläche mit verringerter Reibung ist.

## Claims

1. Method of manufacturing a tubular member (12, 16) made of synthetic material, of a kind wherein the tubular member (12, 16) is extruded, **characterised in that**, during extrusion of the tubular member (12, 16), the extruded synthetic material is subjected to a flow of water in liquid or steam form in contact with the internal (12I) or external (16E) surface of the tubular member (12, 16) in such a manner that crevices (C) are formed in the surface (12I, 16E) of the tubular member (12, 16) in contact with the flow of water, the surface (12I, 16E) having the crevices (C) being designated a reduced-friction surface.

2. Method of manufacturing a tubular member (12, 16) according to claim 1, **characterised in that** the extruded synthetic material is subjected to a flow of water in liquid form.

3. Method of manufacturing a tubular member (12, 16) according to claim 1 or 2, **characterised in that** the flow of water is made to contact the internal surface (12I) of the tubular member (12).

4. Method of manufacturing a tubular member (12) according to claim 3, **characterised in that** the tubular member (12) is extruded in an extruder head (10) comprising a duct (14) intended for injecting the flow of water close to the internal surface (12I) of the tubular member (12).

5. Method of manufacturing a tubular member (16) according to claim 4, **characterised in that** the duct (14) intended for injecting the flow of water close to the internal surface (12I) of the tubular member (12) is a duct intended for injecting a lubricant in contact with the internal surface (12I) of the tubular member (12), the water being injected into the lubricant duct (14) instead of the lubricant.

6. Method of manufacturing a tubular member (16) according to claim 1 or 2, **characterised in that** the flow of water is made to contact the external surface (16E) of the tubular member (16).

7. Method of manufacturing a tubular member (16) according to claim 6, **characterised in that** the flow of water is injected into a nozzle (18) directed towards the external surface (16E) of the tubular member (16).

8. Method of manufacturing a tubular member (12, 16) according to any one of the preceding claims, **characterised in that** the synthetic material is a thermoplastic material.

9. Method of manufacturing a tubular member (12, 16) according to claim 8, **characterised in that** the synthetic material is polyethylene.

10. Tube (12) intended to form a housing for an elongate member such as a cable, especially an optical fibre cable, **characterised in that** it is manufactured by a method according to any one of claims 1 to 9, the internal surface (12I) of the tube (12) being the reduced-friction surface.

11. Sheath (16) for a cable, especially an optical fibre cable, **characterised in that** it is manufactured by a method according to any one of claims 1 to 9, the external surface (16E) of the sheath (16) being the reduced-friction surface.
